# EUROPÄISCHE PATENTANMELDUNG

(11) **EP 4 386 148 A1**
(43) Veröffentlichungstag der Anmeldung: **19.06.2024**
(21) Anmeldenummer: 23216076.2
(22) Anmeldetag: 12.12.2023
(51) Int. Cl.: E03C 1/04, F16K 11/00, G05D 23/13

(54) **SANITÄRARMATUR**

(30) Priorität: 12.12.2022 DE 102022132924
(71) Anmelder: Grohe AG, 58675 Hemer (DE)
(72) Erfinder: TUESHAUS, Jan Philipp, 58675 Hemer (DE); GAIDA, Waldemar, 40549 Duesseldorf (DE)

(57) **Zusammenfassung**

Sanitärarmatur (1), zumindest aufweisend:
- ein Armaturengehäuse (2);
- ein Mischventil (3) zum Mischen von Kaltwasser und Warmwasser zu einem Mischwasser;
- ein Vormischventil (4) zum Mischen von Kaltwasser und Heißwasser zu dem Warmwasser, wobei das Vormischventil (4) aus einer Kaltwasserstellung (5) in eine Heißwasserstellung (6) verstellbar ist; und
- eine Rückstelleinrichtung (7), mit der das Vormischventil (4) in die Kaltwasserstellung (5) zurückstellbar ist, wenn das Mischventil (3) geschlossen wird.

## Beschreibung

Die vorliegende Erfindung betrifft eine Sanitärarmatur, durch die Kaltwasser und Heißwasser zu einem Mischwasser mit einer gewünschten Mischwassertemperatur mischbar ist. Mittels derartiger Sanitärarmaturen ist das Mischwasser insbesondere an Waschbecken, Spülbecken, Duschen und/oder Badewannen bereitstellbar.

Sanitärarmaturen können beispielsweise nach Art eines Einhebelmischers ausgebildet sein, die einen (einzigen) Bedienhebel zur Einstellung der Mischwassertemperatur und einer Abgabemenge des Mischwassers aufweisen. Zur Einstellung der Mischwassertemperatur kann der Bedienhebel um eine vertikale Achse zwischen einer Heißwasserhebelstellung, in der die Mischwassertemperatur einen maximalen Wert aufweist, und einer Kaltwasserhebelstellung, in der die Mischwassertemperatur einen minimalen Wert aufweist, gedreht werden. Zum Öffnen der Sanitärarmatur bzw. zum Starten einer Abgabe des Mischwassers kann der Bedienhebel um eine horizontale Achse geschwenkt werden. Befindet sich der Bedienhebel beim Öffnen der Sanitärarmatur nicht vollständig in der Kaltwasserhebelstellung, wird dem Kaltwasser durch die Sanitärarmatur Heißwasser beigemischt, ohne dass dies durch einen Benutzer der Sanitärarmatur ggf. gewünscht ist. Dies führt zu einem erhöhten Energieverbrauch.

Aufgabe der Erfindung ist es daher, die mit Bezug auf den Stand der Technik geschilderten Probleme zumindest teilweise zu lösen und insbesondere eine Sanitärarmatur anzugeben, durch die ein erhöhter Energieverbrauch vermeidbar ist.

Diese Aufgabe wird gelöst mit einer Sanitärarmatur gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest Folgendes aufweist:
- ein Armaturengehäuse;
- ein Mischventil zum Mischen von Kaltwasser und Warmwasser zu einem Mischwasser;
- ein Vormischventil zum Mischen von Kaltwasser und Heißwasser zu dem Warmwasser, wobei das Vormischventil aus einer Kaltwasserstellung in eine Heißwasserstellung verstellbar ist; und
- eine Rückstelleinrichtung, mit der das Vormischventil in die Kaltwasserstellung zurückstellbar ist, wenn das Mischventil geschlossen wird.

Die Sanitärarmatur kann insbesondere nach Art eines Einhebelmischers ausgebildet sein und/oder dient insbesondere der Bereitstellung eines Mischwassers an einem Waschbecken, Spülbecken, Dusche und/oder Badewanne. Die Sanitärarmatur kann Teil einer Trinkwasserinstallation, beispielsweise eines Gebäudes, sein und/oder für eine solche vorgesehen sein.

Die Sanitärarmatur weist ein Armaturengehäuse auf. Das Armaturengehäuse kann zumindest teilweise aus Kunststoff und/oder Metall, wie zum Beispiel Messing oder eine Zinklegierung, bestehen. Das Armaturengehäuse kann insbesondere an einem Träger, wie zum Beispiel einer (Küchen-)Arbeitsplatte, befestigbar sein.

Die Sanitärarmatur weist ein Mischventil zum Mischen von Kaltwasser und Warmwasser zu einem Mischwasser auf. Das Mischventil kann beispielsweise nach Art einer Einhebelmischkartusche ausgebildet sein und/oder zumindest teilweise in dem Armaturengehäuse der Sanitärarmatur angeordnet sein. Das Mischventil kann ein Mischgehäuse, beispielsweise nach Art eines Kartuschengehäuses, aufweisen, das insbesondere zumindest teilweise aus Kunststoff besteht und/oder zumindest teilweise zylinderförmig ausgebildet ist. In dem Mischgehäuse kann zumindest teilweise ein Stellhebel beweglich befestigt sein, welcher der Betätigung des Mischventils dient. Der Stellhebel ist hierzu insbesondere mit einem Bedienhebel der Sanitärarmatur, beispielsweise mittels einer Schraubverbindung oder Steckverbindung, verbunden. Der Stellhebel kann, insbesondere zur Einstellung einer Mischwassertemperatur, um eine Drehachse drehbar und/oder, insbesondere zur Einstellung einer Abgabemenge des Mischwassers, um eine (insbesondere orthogonal zu der Drehachse verlaufenden) Schwenkachse schwenkbar sein. Weiterhin kann das Mischventil eine feststehende Steuerscheibe und eine bewegliche Steuerscheibe aufweisen. Die feststehende Steuerscheibe und die bewegliche Steuerscheibe können jeweils insbesondere flach bzw. scheibenförmig ausgebildet sein. Weiterhin können die feststehende Steuerscheibe und die bewegliche Steuerscheibe zumindest teilweise aus Keramik bestehen. Die feststehende Steuerscheibe ist insbesondere fest, d. h. insbesondere gegenüber dem Mischgehäuse nicht verschieblich oder nicht drehbar, in dem Mischgehäuse angeordnet, wohingegen die bewegliche Steuerscheibe insbesondere durch den Stellhebel auf der feststehenden Steuerscheibe bewegbar (insbesondere gegenüber dem Mischgehäuse drehbar) ist.

Die Sanitärarmatur weist ein Vormischventil zum Mischen von Kaltwasser und Heißwasser zu dem Warmwasser auf. Bei dem Vormischventil handelt es sich insbesondere nicht um ein Thermostatventil. Das Kaltwasser ist dem Vormischventil, beispielsweise von einem öffentlichen Wasserversorgungsnetz, insbesondere über eine Kaltwasserzuführleitung und/oder das Heißwasser dem Vormischventil, beispielsweise von dem öffentlichen Wasserversorgungsnetz und/oder einem Heißwasserbereiter, insbesondere über eine Heißwasserzuführleitung zuführbar. Bei der Kaltwasserzuführleitung und/oder der Heißwasserzuführleitung kann es sich beispielsweise um eine Rohrleitung oder einen flexiblen Schlauch handeln.

Eine Kaltwassertemperatur des Kaltwassers beträgt insbesondere maximal 25 °C [Celsius], bevorzugt 1 °C bis 25 °C, besonders bevorzugt 5 °C bis 20 °C und/oder eine Heißwassertemperatur des Heißwassers insbesondere maximal 100 °C, bevorzugt 25 °C bis 100 °C, besonders bevorzugt 55 °C bis 65 °C.

Das Kaltwasser und Heißwasser sind insbesondere in einem Warmwassermischraum des Vormischventils zu dem Warmwasser mischbar. Das Vormischventil kann eine Mischwelle aufweisen, die sich insbesondere zumindest teilweise durch den Warmwassermischraum erstreckt. Das Vormischventil bzw. die Mischwelle des Vormischventils ist aus einer Kaltwasserstellung in eine Heißwasserstellung verstellbar, insbesondere drehbar. Zum Verstellen bzw. Drehen des Vormischventils bzw. der Mischwelle, kann das Vormischventil bzw. die Mischwelle mit einem Betätigungselement verbunden sein. Das Betätigungselement kann außerhalb des Armaturengehäuses angeordnet sein, sodass das Betätigungselement durch den Benutzer der Sanitärarmatur betätigbar ist. Das Betätigungselement kann fest oder lösbar mit dem Vormischventil bzw. der Mischwelle verbunden sein. Das Betätigungselement kann als, insbesondere fest angebrachter, Betätigungshebels oder, insbesondere lösbarer bzw. entfernbarer, Schlüssel ausgebildet sein. Durch das Verstellen bzw. Drehen des Vormischventils bzw. der Mischwelle zwischen der Kaltwasserstellung und der Heißwasserstellung ist ein Mischungsverhältnis zwischen dem Kaltwasser und dem Heißwasser, insbesondere stufenlos, veränderbar, wodurch eine Warmwassertemperatur des gemischten Warmwassers durch das Vormischventil einstellbar ist. Durch das Verstellen bzw. Drehen des Vormischventils bzw. der Mischwelle kann eine Spaltbreite eines Kaltwasserregelspalts und/oder eine Spaltbreite eines Heißwasserregelspalts des Vormischventils veränderbar sein. Das Kaltwasser ist dem Warmwassermischraum des Vormischventils insbesondere über den Kaltwasserregelspalt und/oder das Heißwasser dem Warmwassermischraum des Vormischventils insbesondere über den Heißwasserregelspalt zuführbar. Der Kaltwasserregelspalt und/oder der Heißwasserregelspalt sind insbesondere zwischen der Mischwelle des Vormischventils und einem Gehäuse des Vormischventils oder einem Kartuschenadapter des Mischventils ausgebildet. Das Verstellen bzw. Drehen des Vormischventils bzw. der Mischwelle führt insbesondere zu einer gleichzeitigen Änderung der Spaltbreite des Kaltwasserregelspalts und des Heißwasserregelspalts. Eine Vergrößerung der Spaltbreite des Kaltwasserregelspalts führt dabei insbesondere zu einer Verkleinerung des Heißwasserregelspalts. Entsprechend führt eine Verkleinerung der Spaltbreite des Kaltwasserregelspalts insbesondere zu einer Vergrößerung des Heißwasserregelspalts.

In der Kaltwasserstellung ist der Kaltwasserregelspalt insbesondere (vollständig) geöffnet und/oder der Heißwasserregelspalt insbesondere (vollständig) geschlossen. Die Warmwassertemperatur des Warmwassers entspricht dann der Kaltwassertemperatur des Kaltwassers. Mit anderen Worten besteht das Warmwasser in diesem Fall ausschließlich aus dem Kaltwasser. In der Heißwasserstellung ist der Kaltwasserregelspalt insbesondere (vollständig) geschlossen und/oder der Heißwasserregelspalt insbesondere (vollständig) geöffnet. Die Warmwassertemperatur des Warmwassers entspricht dann der Heißwassertemperatur des Heißwassers. Mit anderen Worten besteht das Warmwasser in diesem Fall ausschließlich aus dem Heißwasser. Das Vormischventil bzw. die Mischwelle kann, insbesondere aus der Kaltwasserstellung, in eine Zwischenstellung, d. h. insbesondere in eine Stellung zwischen der Kaltwasserstellung und der Heißwasserstellung, verstellbar bzw. drehbar sein. In der Zwischenstellung sind der Kaltwasserregelspalt und/oder der Heißwasserregelspalt insbesondere teilweise geöffnet. In der Zwischenstellung können der Kaltwasserregelspalt und der Heißwasserregelspalt insbesondere gleich weit geöffnet sein. In der Zwischenstellung kann das Warmwasser aus dem Kaltwasser und dem Warmwasser bestehen. Beispielsweise kann das Warmwasser jeweils zur Hälfte aus Kaltwasser und Warmwasser bestehen bzw. das Mischungsverhältnis zwischen dem Kaltwasser und Warmwasser 1:1 betragen. Die Warmwassertemperatur des Warmwassers kann beispielsweise 1 °C bis 100 °C, bevorzugt 5 °C bis 65 °C, betragen.

Das durch das Vormischventil gemischte Warmwasser ist anschließend dem Mischventil bzw. einem Warmwassereinlass des Mischventils zuführbar. Durch das Mischventil ist das Warmwasser mit (weiterem) Kaltwasser zu dem Mischwasser mischbar. Befindet sich das Vormischventil in der Kaltwasserstellung besteht das Mischwasser ausschließlich aus dem Kaltwasser und/oder entspricht die Mischwassertemperatur des Mischwassers der Kaltwassertemperatur des Kaltwassers. Befindet sich das Vormischventil in der Heißwasserstellung, ist durch das Mischventil Mischwasser mit einer Mischwassertemperatur mischbar, die der Kaltwassertemperatur bis der Heißwassertemperatur entsprechen kann.

Die Sanitärarmatur weist eine Rückstelleinrichtung auf, mit der das Vormischventil in die Kaltwasserstellung zurückstellbar ist, wenn das Mischventil geschlossen wird. Durch die Rückstelleinrichtung ist das Vormischventil bzw. die Mischwelle des Vormischventils insbesondere (automatisch) in die Kaltwasserstellung zurückstellbar, wenn das Mischventil geschlossen wird bzw. geschlossen ist. Insbesondere ist das Vormischventil bzw. die Mischwelle nur dann durch die Rückstelleinrichtung (automatisch) in die Kaltwasserstellung zurückstellbar, wenn das Mischventil geschlossen wird oder geschlossen ist. Durch die Rückstelleinrichtung bzw. durch das Zurückstellen des Vormischventils bzw. der Mischwelle in die Kaltwasserstellung, ist beim (erneuten) Öffnen des Mischventils bzw. der Sanitärarmatur bzw. beim (erneuten) Starten der Abgabe des Mischwassers durch die Sanitärarmatur, insbesondere unabhängig einer Stellung des Stellhebels des Mischventils und/oder des Bedienhebels der Sanitärarmatur, ohne Verstellung des Vormischventils bzw. der Mischwelle aus der Kaltwasserstellung nur Mischwasser abgebbar, das vollständig aus dem Kaltwasser besteht bzw. dessen Mischwassertemperatur der Kaltwassertemperatur entspricht. Hierdurch ist verhinderbar, dass beim Öffnen des Mischventils bzw. der Sanitärarmatur bzw. beim Starten der Abgabe des Mischwassers ungewollt Heißwasser verbraucht wird. Dies senkt einen Energieverbrauch bei der Erzeugung des Heißwassers. Beim oder nach dem Öffnen des Mischventils bzw. der Sanitärarmatur bzw. beim oder nach dem Starten der Abgabe des Mischwassers durch die Sanitärarmatur muss sich der Benutzer der Sanitärarmatur bewusst für die Benutzung von Heißwasser entscheiden, indem er das Vormischventil bzw. die Mischwelle aus der Kaltwasserstellung verstellt bzw. dreht.

Das Vormischventil kann eine Mischwelle umfassen. Die Mischwelle kann nach Art einer Spindel ausgebildet sein. Die Mischwelle kann zumindest teilweise aus Kunststoff und/oder Messing bestehen. Die Mischwelle kann in dem Gehäuse des Vormischventils und/oder in einem Kartuschenadapter für das Mischventil drehbar gelagert sein. Die Mischwelle erstreckt sich zumindest teilweise durch den Warmwassermischraum, das Gehäuse, den Kartuschenadapter und/oder das Armaturengehäuse. Die Mischwelle kann sich teilweise aus dem Armaturengehäuse in eine Umgebung der Sanitärarmatur erstrecken. Das Betätigungselement ist insbesondere verdrehfest zu der Mischwelle an der Mischwelle befestigbar. Hierzu kann die Mischwelle beispielsweise eine Riefenverzahnung für das Betätigungselement aufweisen.

Die Rückstelleinrichtung kann eine Rückstellfeder aufweisen, mit der das Vormischventil und/oder die Mischwelle in die Kaltwasserstellung rückstellbar ist. Die Rückstellfeder kann als Schraubenfeder und/oder Torsionsfeder ausgebildet sein. Die Rückstellfeder kann zumindest teilweise auf der Mischwelle angeordnet sein. Die Rückstellfeder kann an der Mischwelle und/oder dem Armaturengehäuse, dem Gehäuse, dem Betätigungselement und/oder dem Kartuschenadapter befestigt sein. Die Rückstellfeder ist beim Verstellen bzw. Drehen des Vormischventils bzw. der Mischwelle spannbar. Die Rückstellung des Vormischventils bzw. der Mischwelle in die Kaltwasserstellung kann insbesondere aus der Zwischenstellung oder Heißwasserstellung erfolgen. Die Rückstellung des Vormischventils bzw. der Mischwelle in die Kaltwassereinstellung kann durch die Federkraft der Rückstellfeder erfolgen.

Die Rückstelleinrichtung kann einen Blockierhebel umfassen, der eine Rückstellung des Vormischventils in die Kaltwasserstellung blockiert, wenn das Mischventil zumindest teilweise geöffnet ist. Insbesondere kann der Blockierhebel eine Rückstellung der Mischwelle in die Kaltwasserstellung blockieren, wenn das Mischventil zumindest teilweise geöffnet ist. Durch den Blockierhebel ist die Rückstellung des Vormischventils bzw. der Mischwelle insbesondere (nur dann) blockierbar, wenn das Vormischventil bzw. die Mischwelle sich in der Zwischenstellung und/oder der Heißwasserstellung befindet. Der Blockierhebel kann in dem Armaturengehäuse, dem Gehäuse und/oder dem Kartuschenadapter angeordnet und/oder in dem Armaturengehäuse, dem Gehäuse und/oder dem Kartuschenadapter um eine Hebeldrehachse drehbar gelagert sein. Der Blockierhebel kann zumindest teilweise aus Kunststoff und/oder Metall bestehen. Der Blockierhebel kann zumindest teilweise L-förmig ausgebildet sein. Das Blockieren der Rückstellung des Vormischventils bzw. der Mischwelle kann durch Formschluss mit dem Blockierhebel erfolgen. Der Blockierhebel kann einen Blockierabschnitt aufweisen, der insbesondere formschlüssig mit dem Vormischventil bzw. der Mischwelle verbindbar ist. Durch das Blockieren der Rückstellung des Vormischventils muss das Vormischventil bzw. die Mischwelle durch den Benutzer nicht manuell in der Zwischenstellung oder Heißwasserstellung gehalten werden.

Der Blockierhebel kann zwischen einer Blockierstellung, in der der Blockierhebel die Rückstellung des Vormischventils blockiert, und einer Freigabestellung, in der der Blockierhebel die Rückstellung des Vormischventils freigibt, verstellbar sein. In der Blockierstellung steht der Blockierhebel insbesondere mit dem Vormischventil bzw. der Mischwelle, insbesondere formschlüssig, in Eingriff.

Der Blockierhebel kann in der Blockierstellung mit einer Raste des Vormischventils in Eingriff stehen. Insbesondere kann der Blockierhebel in der Blockierstellung mit einer Raste der Mischwelle in Eingriff stehen. Die Mischwelle kann zumindest eine Raste aufweisen. Beispielsweise kann die Mischwelle eine erste Raste für die Zwischenstellung und eine zweite Raste für die Heißwasserstellung aufweisen. Die zumindest eine Raste kann insbesondere an einer Umfangsfläche der Mischwelle ausgebildet sein.

Die Rückstelleinrichtung kann einen Blockierkolben umfassen, der durch das Mischwasser aus einer Kolbenfreigabestellung in eine Kolbenblockierstellung verstellbar ist, in der der Blockierkolben den Blockierhebel in der Blockierstellung hält. Der Blockierkolben kann zumindest teilweise aus Kunststoff und/oder Metall bestehen. Der Blockierkolben kann zumindest teilweise zylinderförmig und/oder stiftförmig ausgebildet sein. Der Blockierkolben kann zumindest teilweise in dem Armaturengehäuse, dem Gehäuse und/oder dem Kartuschenadapter angeordnet sein. Der Blockierkolben kann zumindest teilweise in einer Kolbenführung des Armaturengehäuses, des Gehäuses und/oder des Kartuschenadapters, insbesondere linear, geführt sein. In der Kolbenfreigabestellung gibt der Blockierkolben den Blockierhebel frei, sodass der Blockierhebel, insbesondere durch die Rückstellfeder und/oder insbesondere aus der Blockierstellung, in die Freigabestellung verstellbar ist. Bei geöffnetem Mischventil steht der Blockierkolben bzw. eine (erste) Stirnfläche des Blockierkolbens insbesondere zumindest teilweise mit dem Mischwasser in Kontakt, sodass das Mischwasser bzw. der Druck des Mischwassers den Blockierkolben aus der Kolbenfreigabestellung in die Kolbenblockierstellung verstellt. In der Kolbenblockierstellung drückt bzw. schwenkt der Blockierkolben den Blockierhebel insbesondere gegen die Mischwelle, sodass der Blockierhebel die Blockierstellung erreicht, wenn das Vormischventil bzw. die Mischwelle aus der Kaltwasserstellung in die Zwischenstellung oder die Heißwasserstellung verstellt bzw. gedreht werden.

Der Blockierkolben kann durch eine Kolbenrückstellfeder in die Kolbenfreigabestellung zurückstellbar sein. Die Kolbenrückstellfeder kann beispielsweise als Schraubenfeder ausgebildet sein und/oder den Blockierkolben zumindest teilweise umgeben. Die Schraubenfeder kann sich beispielsweise an dem Armaturengehäuse, dem Gehäuse und/oder dem Kartuschenadapter abstützen. Der Blockierkolben ist durch die Kolbenrückstellfeder insbesondere nur dann und/oder automatisch in die Kolbenfreigabestellung zurückstellbar, wenn das Mischventil geschlossen wird bzw. geschlossen ist, insbesondere weil der Blockierkolben dann nicht mehr durch das Mischwasser bzw. den Druck des Mischwassers gegen eine Federkraft der Kolbenrückstellfeder in die Kolbenblockierstellung verstellt wird.

Der Blockierkolben kann über eine Feder mit dem Blockierhebel verbunden sein. Die Feder kann als Schraubenfeder ausgebildet sein. Die Feder kann zwischen dem Blockierkolben und im Blockierhebel angeordnet sein. Die Feder kann sich an der (zweiten) Stirnfläche des Blockierkolbens und/oder dem Blockierhebel abstützen.

Die Rückstelleinrichtung kann ein Formgedächtniselement zum Rückstellen des Vormischventils in die Kaltwasserstellung aufweisen. Das Formgedächtniselement kann nach Art eines Formgedächtnisdrahts ausgebildet sein. Das Formgedächtniselement bzw. der Formgedächtnisdraht können zumindest teilweise aus einer Formgedächtnislegierung bestehen. Bei der Formgedächtnislegierung kann es sich beispielsweise um eine Nickel-Titan-Legierung oder eine Nickel-Titan-Kupfer-Legierung handeln. Das Formgedächtniselement bzw. der Formgedächtnisdraht können sich insbesondere bei einer Erhitzung zusammenziehen. Ein erstes längsseitiges Ende des Formgedächtniselements bzw. des Formgedächtnisdrahts kann an der Mischwelle befestigt sein. Ein zweites längsseitiges Ende des Formgedächtniselements bzw. des Formgedächtnisdrahts kann beispielsweise an dem Armaturengehäuse, dem Gehäuse und/oder dem Kartuschenadapter befestigt sein. Das Formgedächtniselement bzw. der Formgedächtnisdraht ist beim Verstellen bzw. Drehen des Vormischventils bzw. der Mischwelle aus der Kaltwasserstellung aus einer Ursprungsform bzw. Ausgangsform in eine verformte Form plastisch verformbar und/oder in einer Längsrichtung des Formgedächtniselements bzw. des Formgedächtnisdrahts (plastisch) steckbar. Zum Rückstellen des Vormischventils bzw. der Mischwelle in die Kaltwasserstellung ist das Formgedächtniselement bzw. der Formgedächtnisdraht insbesondere erhitzbar. Hierdurch formt sich das Formgedächtniselement bzw. der Formgedächtnisdraht in seine Ursprungsform zurück, wodurch das Vormischventil bzw. die Mischwelle in die Kaltwasserstellung zurückstellbar sind. Zur Erhitzung des Formgedächtniselements ist das Formgedächtniselement bzw. der Formgedächtnisdraht beispielsweise zumindest teilweise mit Strom durchströmbar. Hierzu kann das Formgedächtniselement bzw. der Formgedächtnisdraht zwei elektrische Kontakte aufweisen, über die das Formgedächtniselement bzw. der Formgedächtnisdraht mit einer Stromquelle verbindbar ist. Alternativ oder kumulativ kann das Formgedächtniselement bzw. der Formgedächtnisdraht zumindest teilweise mit Wasser, Warmwasser, Heißwasser und/oder Mischwasser erhitzbar sein bzw. erhitzt werden.

Die Sanitärarmatur kann einen Sensor aufweisen, mit dessen Hilfe eine Umformung des Formgedächtniselements bzw. des Formgedächtnisdrahts in eine Ursprungsform steuerbar ist. Der Sensor kann beispielsweise mit einer, insbesondere elektronischen, Steuerung der Sanitärarmatur verbunden sein. Die Steuerung kann beispielsweise einen Mikroprozessor umfassen. Durch den Sensor ist insbesondere ein Schließen und/oder eine Schließstellung der Sanitärarmatur bzw. des Mischventils detektierbar. Mithilfe des Sensors und/oder der Steuerung kann die Umformung des Formgedächtniselements bzw. des Formgedächtnisdrahts aktiviert bzw. gestartet werden, wenn die Sanitärarmatur bzw. das Mischventil geschlossen wird bzw. sich in der Schließstellung befindet.

Mit dem Sensor kann eine Strömung des Heißwassers und/oder Mischwassers detektierbar sein. Der Sensor kann nach Art eines Strömungssensor oder Durchflusssensors ausgebildet sein. Insbesondere kann mit dem Sensor eine Strömung des Heißwassers in der Heißwasserzuführleitung und/oder eine Strömung des Mischwassers von dem Mischventil zu einer Auslauföffnung der Sanitärarmatur oder in einem Mischwasserkanal des Mischwassers detektierbar sein. Die Umformung des Formgedächtniselements bzw. des Formgedächtnisdrahts in die Ursprungsform kann aktivierbar sein, wenn ein Volumenstrom des Heißwassers und/oder des Mischwassers beispielsweise auf 0 m³/s [Kubikmeter pro Sekunde] sinkt.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine erste Ausführungsvariante einer Sanitärarmatur in einer ersten Schnittdarstellung;
- Fig. 2:: die erste Ausführungsvariante der Sanitärarmatur in einer ersten Betriebssituation in einer zweiten Schnittdarstellung;
- Fig. 3:: die erste Ausführungsvariante der Sanitärarmatur in einer zweiten Betriebssituation in der zweiten Schnittdarstellung;
- Fig. 4:: die erste Ausführungsvariante der Sanitärarmatur in einer dritten Betriebssituation in der zweiten Schnittdarstellung;
- Fig. 5:: die erste Ausführungsvariante der Sanitärarmatur in einer vierten Betriebssituation in der zweiten Schnittdarstellung; und
- Fig. 6:: die zweite Ausführungsvariante der Sanitärarmatur in einer perspektivischen Darstellung.

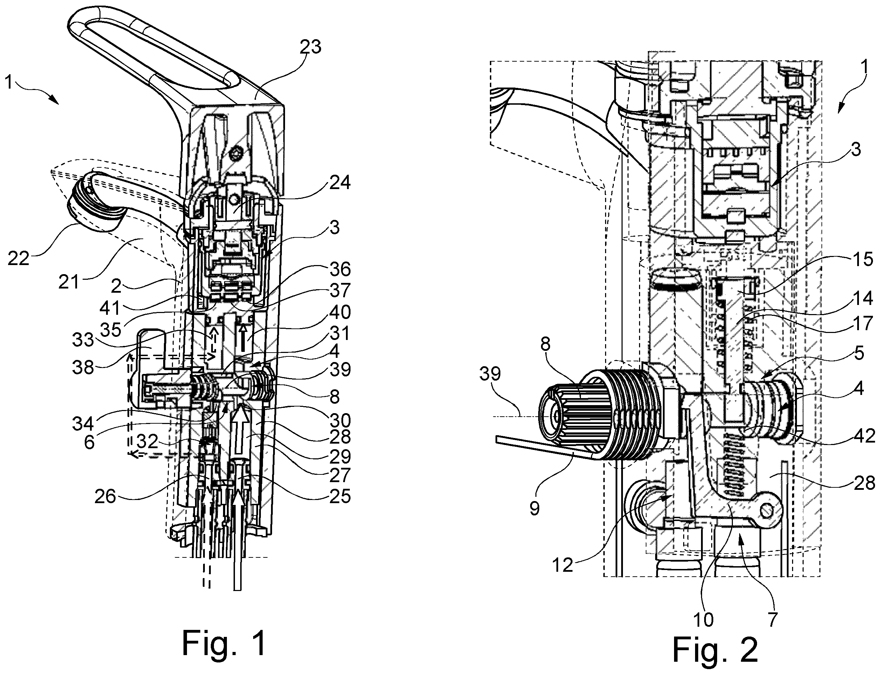

Die Fig. 1 zeigt eine erste Ausführungsvariante einer Sanitärarmatur 1 in einer ersten Schnittdarstellung. Die Sanitärarmatur 1 umfasst ein Armaturengehäuse 2 mit einem Auslauf 21 und einer Auslauföffnung 22. Weiterhin umfasst die Sanitärarmatur 1 einen Bedienhebel 23, der zur Steuerung einer Abgabemenge eines Mischwassers um eine horizontale Achse schwenkbar und zur Einstellung einer Mischwassertemperatur des Mischwassers um eine vertikale Achse drehbar ist. Hierzu ist der Bedienhebel 23 mit einem Stellhebel 24 eines Mischventils 3 verbunden, das hier nach Art einer Einhebelmischkartusche ausgebildet ist.

In dem Armaturengehäuse 2 der Sanitärarmatur 1 ist ein Vormischventil 4 zum Mischen von Kaltwasser und Heißwasser zu einem Warmwasser angeordnet. Hierzu ist dem Vormischventil 4 Heißwasser über eine Heißwasserzuführleitung 25 und Kaltwasser über eine Kaltwasserzuführleitung 26 zuführbar. Die Heißwasserzuführleitung 25 und die Kaltwasserzuführleitung 26 münden in einer Wasserführung 27, die das Mischventil 3 in dem Armaturengehäuse 2 der Sanitärarmatur 1 trägt und als Gehäuse 28 für das Vormischventil 4 dient. Das Heißwasser ist über einen Heißwasserkanal 29 des Gehäuses 28 und einen Heißwasserregelspalt 30 des Vormischventils 4 einem Warmwassermischraum 31 des Vormischventils 4 zuführbar. Das Kaltwasser ist über einen ersten Kaltwasserkanal 32 des Gehäuses 28 und einen Kaltwasserregelspalt 34 des Vormischventils 4 dem Warmwassermischraum 31 des Vormischventils 4 zuführbar. Das Kaltwasser ist über einen zweiten Kaltwasserkanal 33 des Gehäuses 28 unter Umgehung des Vormischventils 4 dem Mischventil 3 zuführbar. Der zweite Kaltwasserkanal 33 führt zu einem Kaltwassereinlass 35 des Mischventils 3.

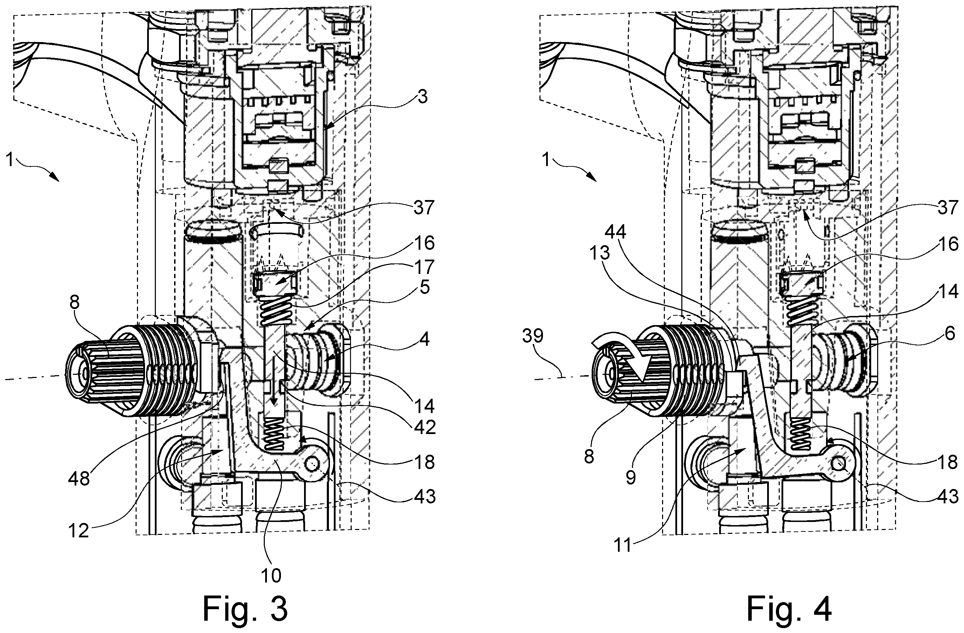

Das Vormischventil 4 umfasst eine Mischwelle 8, die sich durch den Warmwassermischraum 31 erstreckt und mittels der ein Mischungsverhältnis zwischen dem in dem Warmwassermischraum 31 gemischten Kaltwasser und Heißwasser einstellbar ist. Die Mischwelle 8 ist durch einen Benutzer der Sanitärarmatur 1 über ein Betätigungselement 38 um eine Drehachse 39 drehbar. Das Drehen der Mischwelle 8 um die Drehachse 39 bewirkt eine Änderung einer Spaltbreite des Heißwasserregelspalts 30 und des Kaltwasserregelspalts 34, sodass sich das Mischungsverhältnis zwischen dem Kaltwasser und dem Heißwasser in dem Warmwassermischraum 31 und somit eine Warmwassertemperatur des gemischten Warmwassers ändert. Eine Drehung der Mischwelle 8 in einer ersten Drehrichtung um die Drehachse 39 führt zu einer Verringerung der Spaltbreite des Heißwasserregelspalts 30 und einer Vergrößerung der Spaltbreite des Kaltwasserregelspalts 34, sodass die Warmwassertemperatur des Warmwassers sinkt. Eine Drehung der Mischwelle 8 in einer zu der ersten Drehrichtung entgegengesetzten zweiten Drehrichtung um die Drehachse 39 führt zu einer Vergrößerung der Spaltbreite des Heißwasserregelspalts 30 und einer Verringerung der Spaltbreite des Kaltwasserregelspalts 34, sodass die Warmwassertemperatur des Warmwassers steigt. Die Mischwelle 8 ist um die Drehachse 39 zwischen einer in der Fig. 1 gezeigten Heißwasserstellung 6 und einer in den Fig. 2 und 3 gezeigten Kaltwasserstellung 5 verstellbar. In der Heißwasserstellung 6 ist der Kaltwasserregelspalt 34 geschlossen und der Heißwasserregelspalt 30 (vollständig) geöffnet. Das Warmwasser entspricht dann dem Heißwasser bzw. die Warmwassertemperatur des Warmwassers der Heißwassertemperatur des Heißwassers. In der Kaltwasserstellung 5 ist der Kaltwasserregelspalt 34 (vollständig) geöffnet und der Heißwasserregelspalt 30 geschlossen. Das Warmwasser entspricht dann dem Kaltwasser bzw. die Warmwassertemperatur des Warmwassers der Kaltwassertemperatur des Kaltwassers.

Das in dem Warmwassermischraum 31 des Vormischventils 4 gemischte Warmwasser ist über einen Warmwasserkanal 40 des Gehäuses 28 einem Warmwassereinlass 36 des Mischventils 3 zuführbar, sodass anschließend das Kaltwasser und das Warmwasser durch das Mischventil 3 zu dem Mischwasser mit der gewünschten Mischwassertemperatur mischbar sind. Das Mischwasser ist von dem Mischventil 3 über einen Mischwasserauslass 37 des Mischventils 3 und einem in der Fig. 1 teilweise zu erkennenden Mischwasserkanal 41 der Auslauföffnung 22 des Auslaufs 21 zuführbar.

Die Fig. 2 zeigt die erste Ausführungsvariante der Sanitärarmatur 1 in einer ersten Betriebssituation in einer zweiten Schnittdarstellung. In der ersten Betriebssituation ist das Mischventil 3 geschlossen, sodass durch das Mischventil 3 kein Mischwasser gemischt bzw. abgegeben wird. Das Vormischventil 4 bzw. die Mischwelle 8 befinden sich in der ersten Betriebssituation in der Kaltwasserstellung 5, in der das Warmwasser dem Kaltwasser bzw. die Warmwassertemperatur des Warmwassers der Kaltwassertemperatur des Kaltwassers entspricht. Das Vormischventil 4 bzw. die Mischwelle 8 sind über das in der Fig. 1 gezeigte Betätigungselement 38 aus der Kaltwasserstellung 5 in die in der Fig. 4 gezeigte Heißwasserstellung 6 um die Drehachse 39 verstellbar bzw. drehbar. Dabei wird eine mit der Mischwelle 8 verbundene Rückstellfeder 9 einer Rückstelleinrichtung 7 der Sanitärarmatur 1 gespannt. Die Rückstellfeder 9 stellt bzw. dreht die Mischwelle 8 nach einem Loslassen des in der Fig. 1 gezeigten Betätigungselements 38 automatisch wieder in die Kaltwasserstellung 5 zurück. Die Rückstellfeder 9 ist hier nach Art einer Schraubenfeder bzw. Torsionsfeder ausgebildet und zumindest teilweise auf der Mischwelle 8 angeordnet.

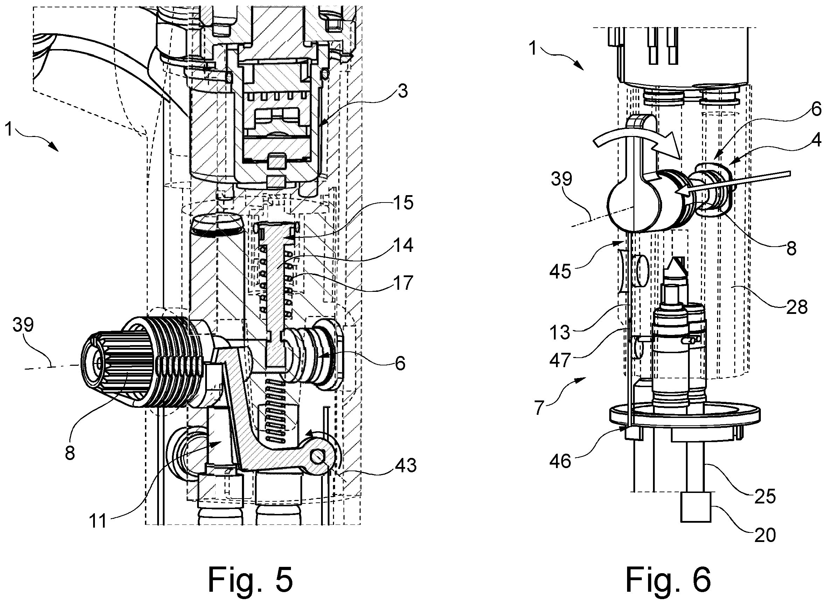

Die Rückstelleinrichtung 7 umfasst einen Blockierkolben 14, der in einer Blockierkolbenführung 42 des Gehäuses 28 zwischen einer in den Fig. 2 und 5 gezeigten Kolbenfreigabestellung 15 und einer in den Fig. 3 und 4 gezeigten Kolbenblockierstellung 16 verstellbar ist. In der ersten Betriebssituation wird der Blockierkolben 14 durch eine Kolbenrückstellfeder 17 in die Kolbenfreigabestellung 15 gedrückt. Die Kolbenrückstellfeder 17 ist nach Art einer Schraubenfeder ausgebildet, auf dem Blockierkolben 14 angeordnet und stützt sich an dem Gehäuse 28 ab. In der Kolbenfreigabestellung 15 gibt der Blockierkolben 14 einen Blockierhebel 10 der Rückstelleinrichtung 7 frei.

Die Fig. 3 zeigt die erste Ausführungsvariante der Sanitärarmatur 1 in einer zweiten Betriebssituation in der zweiten Schnittdarstellung. In der zweiten Betriebssituation ist das Mischventil 3 geöffnet, sodass durch das Mischventil 3 Mischwasser gemischt bzw. über den Mischwasserauslass 37 abgegeben wird. Das Vormischventil 4 bzw. die Mischwelle 8 befinden sich in der zweiten Betriebssituation in der Kaltwasserstellung 5, in der das Warmwasser dem Kaltwasser bzw. die Warmwassertemperatur des Warmwassers der Kaltwassertemperatur des Kaltwassers entspricht. Hierdurch entspricht das Mischwasser dem Kaltwasser bzw. die Mischwassertemperatur der Kaltwassertemperatur unabhängig von einer Stellung des in der Fig. 1 gezeigten Bedienhebels 23 des Mischventils 3.

Der Blockierkolben 14 steht mit dem von dem Mischventil 3 abgegebenen Mischwasser in Kontakt, sodass der Blockierkolben 14 durch das Mischwasser bzw. den Druck des Mischwassers in der Blockierkolbenführung 42 gegen die Kolbenrückstellfeder 17 in die Kolbenblockierstellung 16 verstellt wird. In der Kolbenblockierstellung 16 drückt der Blockierkolben 14 über eine Feder 18 auf den Blockierhebel 10. Der Blockierhebel 10 ist um eine Hebeldrehachse 43 drehbar gelagert, sodass der Blockierhebel 10 durch den Blockierkolben 14 gegen eine Hebelanlagefläche 48 der Mischwelle 8 gedrückt wird. In der zweiten Betriebssituation befindet sich der Blockierhebel 10 in einer Freigabestellung 12. Die Feder 18 ist nach Art einer Schraubenfeder ausgebildet.

Die Fig. 4 zeigt die erste Ausführungsvariante der Sanitärarmatur 1 in einer dritten Betriebssituation in der zweiten Schnittdarstellung. In der dritten Betriebssituation ist das Mischventil 3 weiterhin geöffnet, sodass durch das Mischventil 3 Mischwasser gemischt bzw. über den Mischwasserauslass 37 abgegeben wird. Im Vergleich zur in der Fig. 3 gezeigten zweiten Betriebssituation wurde die Mischwelle 8 in der dritten Betriebssituation um die Drehachse 39 in die Heißwasserstellung 6 gedreht, in der das Warmwasser dem Heißwasser bzw. die Warmwassertemperatur des Warmwassers der Heißwassertemperatur des Heißwassers entspricht. Hierdurch ist durch das Mischventil 3 Mischwasser mit einer Mischwassertemperatur mischbar, die (je nach Stellung des in der Fig. 1 gezeigten Bedienhebels 23) von der Kaltwassertemperatur bis zu der Warmwassertemperatur bzw. Heißwassertemperatur betragen kann.

Da der Blockierkolben 14 in der Kolbenblockierstellung 16 den Blockierhebel 10 über die Feder 18 um die Hebeldrehachse 43 gegen die Mischwelle 8 drückt, rastet ein Blockierabschnitt 44 des Blockierhebels 10 in eine Raste 13 der Mischwelle 8 ein, wenn die Mischwelle 8 die Heißwasserstellung 6 erreicht. Hierdurch befindet sich der Blockierhebel 10 in einer Blockierstellung 11, in der der Blockierhebel 10 eine (automatische) Rückstellung der Mischwelle 8 in die in den Fig. 2 und 3 gezeigte Kaltwasserstellung 5 durch die Rückstellfeder 9 blockiert.

Die Fig. 5 zeigt die erste Ausführungsvariante der Sanitärarmatur 1 in einer vierten Betriebssituation in der zweiten Schnittdarstellung. In der vierten Betriebssituation wurde das Mischventil 3 wieder geschlossen, sodass durch das Mischventil 3 kein Mischwasser gemischt bzw. abgegeben wird. Hierdurch kann die Kolbenrückstellfeder 17 den Blockierkolben 14 zurück in die Kolbenfreigabestellung 15 stellen, sodass der Blockierkolben 14 den Blockierhebel 10 freigibt. Die Rückstellfeder 9 kann die Mischwelle 8 nun aus der Heißwasserstellung 6 um die Drehachse 39 zurück in die in den Fig. 2 und 3 gezeigte Kaltwasserstellung 5 stellen und dabei den Blockierhebel 10 aus der Blockierstellung 11 um die Hebeldrehachse 43 zurück in die in den Fig. 2 und 3 gezeigte Freigabestellung 12 schwenken. Anschließend befindet sich die Sanitärarmatur 1 wieder in der in der Fig. 2 gezeigten ersten Betriebssituation.

Die. 6 zeigt eine zweite Ausführungsvariante der Sanitärarmatur 1 in einer perspektivischen Darstellung. Die zweite Ausführungsvariante der Sanitärarmatur 1 ist entsprechend der in der Fig. 1 gezeigten ersten Ausführungsvariante der Sanitärarmatur 1 ausgebildet, jedoch in der Fig. 6 ohne das Armaturengehäuse 2 dargestellt. Die zweite Ausführungsvariante der Sanitärarmatur 1 unterscheidet sich von der ersten Ausführungsvariante der Sanitärarmatur 1 lediglich durch ihre Rückstelleinrichtung 7. Die Rückstelleinrichtung 7 umfasst ein Formgedächtniselement 19, das hier als Formgedächtnisdraht ausgebildet ist. Ein erstes längsseitiges Ende 45 des Formgedächtniselements 19 ist an der Mischwelle 8 und ein zweites längsseitiges Ende 46 des Formgedächtniselements 19 an dem Gehäuse 28 und/oder dem in der Fig. 6 nicht gezeigten Armaturengehäuse 2 befestigt. Das Formgedächtniselement 19 wird beim Verstellen bzw. Drehen der Mischwelle 8 des Vormischventils 4 um die Drehachse 39 aus der in den Fig. 2 und 3 gezeigten Kaltwasserstellung 5 in die Heißwasserstellung 6 aus einer Ursprungsform in eine verformte Form plastisch verformt bzw. in einer Längsrichtung 47 des Formgedächtniselements 19 (plastisch) gesteckt. Dabei kann das Formgedächtniselement 19 zumindest teilweise auf die Mischwelle 8 gewickelt werden.

Die Sanitärarmatur 1 weist einen Sensor 20 auf, mit dessen Hilfe eine Umformung des Formgedächtniselements 19 in die Ursprungsform steuerbar ist. Hierzu ist durch den Sensor 20 eine Strömung des Heißwassers durch die Heißwasserzuführleitung 25 überwachbar. Der Sensor 20 ist mit einer hier nicht gezeigten Steuerung der Sanitärarmatur 1 verbunden, durch die eine Erhitzung des Formgedächtniselements 19 aktivierbar ist, wenn ein Volumenstrom des durch die Heißwasserzuführleitung 25 strömenden Heißwassers nach einer Verwendung der Sanitärarmatur 1 auf 0 m³/s [Kubikmeter pro Sekunde] sinkt. Zur Erhitzung des Formgedächtniselements 19 kann durch das Formgedächtniselement 19 beispielsweise Strom geleitet werden. Hierzu kann das Formgedächtniselement 19 zwei hier nicht gezeigte elektrische Kontakte aufweisen, über die das Formgedächtniselement 19 mit einer hier nicht gezeigten Stromquelle verbindbar ist. Durch das Umformen bzw. Zusammenziehen des Formgedächtniselements in seine Ursprungsform verstellt bzw. dreht das Formgedächtniselement 19 die Mischwelle 8 um die Drehachse 39 zurück in die in den Fig. 2 und 3 gezeigte Kaltwasserstellung 5.

Durch die vorliegende Erfindung ist ein erhöhter Energieverbrauch vermeidbar.

### Bezugszeichenliste

- 1: Sanitärarmatur
- 2: Armaturengehäuse
- 3: Mischventil
- 4: Vormischventil
- 5: Kaltwasserstellung
- 6: Heißwasserstellung
- 7: Rückstelleinrichtung
- 8: Mischwelle
- 9: Rückstellfeder
- 10: Blockierhebel
- 11: Blockierstellung
- 12: Freigabestellung
- 13: Raste
- 14: Blockierkolben
- 15: Kolbenfreigabestellung
- 16: Kolbenblockierstellung
- 17: Kolbenrückstellfeder
- 18: Feder
- 19: Formgedächtniselement
- 20: Sensor
- 21: Auslauf
- 22: Auslauföffnung
- 23: Bedienhebel
- 24: Stellhebel
- 25: Heißwasserzuführleitung
- 26: Kaltwasserzuführleitung
- 27: Wasserführung
- 28: Gehäuse
- 29: Heißwasserkanal
- 30: Heißwasserregelspalt
- 31: Warmwassermischraum
- 32: erster Kaltwasserkanal
- 33: zweiter Kaltwasserkanal
- 34: Kaltwasserregelspalt
- 35: Kaltwassereinlass
- 36: Warmwassereinlass
- 37: Mischwasserauslass
- 38: Betätigungselement
- 39: Drehachse
- 40: Warmwasserkanal
- 41: Mischwasserkanal
- 42: Blockierkolbenführung
- 43: Hebeldrehachse
- 44: Blockierabschnitt
- 45: erstes längsseitiges Ende
- 46: zweites längsseitiges Ende
- 47: Längsrichtung
- 48: Hebelanlagefläche

## Patentansprüche

1. Sanitärarmatur (1), zumindest aufweisend:
- ein Armaturengehäuse (2);
- ein Mischventil (3) zum Mischen von Kaltwasser und Warmwasser zu einem Mischwasser;
- ein Vormischventil (4) zum Mischen von Kaltwasser und Heißwasser zu dem Warmwasser, wobei das Vormischventil (4) aus einer Kaltwasserstellung (5) in eine Heißwasserstellung (6) verstellbar ist; und
- eine Rückstelleinrichtung (7), mit der das Vormischventil (4) in die Kaltwasserstellung (5) zurückstellbar ist, wenn das Mischventil (3) geschlossen wird.

2. Sanitärarmatur (1) nach Patentanspruch 1, wobei das Vormischventil (4) eine Mischwelle (8) umfasst.

3. Sanitärarmatur (1) nach einem der vorhergehenden Patentansprüche, wobei die Rückstelleinrichtung (7) eine Rückstellfeder (9) aufweist, mit der das Vormischventil (4) in die Kaltwasserstellung (5) rückstellbar ist.

4. Sanitärarmatur (1) nach einem der vorhergehenden Patentansprüche, wobei die Rückstelleinrichtung (7) einen Blockierhebel (10) umfasst, der eine Rückstellung des Vormischventils (4) in die Kaltwasserstellung (5) blockiert, wenn das Mischventil (3) zumindest teilweise geöffnet ist.

5. Sanitärarmatur (1) nach Patentanspruch 4, wobei der Blockierhebel (10) zwischen einer Blockierstellung (11), in der der Blockierhebel (10) die Rückstellung des Vormischventils (4) blockiert, und einer Freigabestellung (12), in der der Blockierhebel (10) die Rückstellung des Vormischventils (4) freigibt, verstellbar ist.

6. Sanitärarmatur (1) nach Patentanspruch 5, wobei der Blockierhebel (10) in der Blockierstellung (11) mit einer Raste (13) des Vormischventils (4) in Eingriff steht.

7. Sanitärarmatur (1) nach Patentanspruch 5 oder 6, wobei die Rückstelleinrichtung (7) einen Blockierkolben (14) umfasst, der durch das Mischwasser aus einer Kolbenfreigabestellung (15) in eine Kolbenblockierstellung (16) verstellbar ist, in der der Blockierkolben (14) den Blockierhebel (10) in der Blockierstellung (11) hält.

8. Sanitärarmatur (1) nach Patentanspruch 7, wobei der Blockierkolben (14) durch eine Kolbenrückstellfeder (17) in die Kolbenfreigabestellung (15) zurückstellbar ist.

9. Sanitärarmatur (1) nach Patentanspruch 7 oder 8, wobei der Blockierkolben (14) über eine Feder (18) mit dem Blockierhebel (10) verbunden ist.

10. Sanitärarmatur (1) nach Patentanspruch 1 oder 2, wobei die Rückstelleinrichtung (7) ein Formgedächtniselement (19) zum Rückstellen des Vormischventils (4) in die Kaltwasserstellung (5) aufweist.

11. Sanitärarmatur (1) nach Patentanspruch 10, aufweisend einen Sensor (20), mit dessen Hilfe eine Umformung des Formgedächtniselements (19) in eine Ursprungsform steuerbar ist.

12. Sanitärarmatur (1) nach Patentanspruch 11, wobei mit dem Sensor (20) eine Strömung des Heißwassers oder Mischwassers detektierbar ist.
